# FASCICULE DE BREVET EUROPEEN

(11) **EP 1 465 507 B1**
(45) Date de publication et mention de la délivrance du brevet: **29.11.2006**
(21) Numéro de dépôt: 03715020.8
(22) Date de dépôt: 17.01.2003
(51) Int. Cl.: A44B 11/28, F16B 45/02

(54) **BOUCLE DE FIXATION A AUTO-VERROUILLAGE ET A REGLAGE D UNE SA NGLE**
SCHNALLE ZUR SELBSTVERRIEGELUNG UND EINSTELLUNGSFESTLEGUNG EINES GÜRTELS
BUCKLE FOR SELF-LOCKING AND ADJUSTMENT FIXING OF A BELT

(30) Priorité: 18.01.2002 FR 0200593
(43) Date de publication de la demande: 13.10.2004
(73) Titulaire: ZEDEL, 38920 Crolles (FR)
(72) Inventeur: HEDE, Jean-Marc, F-38420 Domène (FR); PETZL, Paul, F-38530 Barraux (FR)
(74) Mandataire: Hecké, Gérard
(86) Numéro de dépôt international: PCT/FR2003/000146
(87) Numéro de publication internationale: WO 2003/059107

(56) Documents cités:
- CH-A- 674 302
- US-A- 3 992 756
- US-A- 4 074 401
- US-A- 4 928 360
- US-A- 6 023 820

## Description

L'invention est relative à une boucle de fixation à auto-verrouillage comprenant une embase équipée d'un crochet pour l'accrochage d'un anneau de retenue, et un bouton de manoeuvre mobile entre une position de fermeture et une position d'ouverture de la boule, respectivement pour retenir et libérer ledit anneau de retenue (voir par exemple le document CH-A-674 302).

La boucle de fixation peut à titre d'exemple, équiper une sangle d'une ceinture ou d'un baudrier d'escalade ou de spéléologie. Il est impératif pour des raisons de manipulations, que l'ouverture de la boucle s'effectue sans avoir à retirer la sangle, cette dernière devant en plus être réglable. D'autre part, pour des questions de sécurité, il ne peut y avoir d'ouverture inopinée de la boucle.

### Objet de l'invention

L'objet de l'invention consiste à réaliser une boucle de fixation évitant toute ouverture intempestive, et ne nécessitant pas le retrait de la sangle lors d'une ouverture volontaire.

La boucle selon l'invention est caractérisée en ce qu'elle comporte:
- un moyen de verrouillage du bouton de manoeuvre en position de fermeture,
- et un anneau de réglage de la longueur de la sangle, ledit anneau étant inséré entre le bouton et l'embase à l'opposé du crochet.

Selon un mode de réalisation préférentiel, le moyen de verrouillage comprend un verrou agencé en basculeur monté à pivotement sur un axe entre une position verrouillée et une position déverrouillée, et un ressort de rappel sollicitant le réarmement automatique dudit verrou en position verrouillée pour empêcher le déplacement du bouton de manoeuvre vers la position d'ouverture. L'embase comporte un étrier agencé en support d'articulation du bouton de manoeuvre, et un premier trou pour l'introduction d'une patte du bouton lors du passage vers la position d'ouverture.

L'embase est dotée d'un deuxième trou situé sous l'anneau de réglage pour le passage de la sangle. L'anneau de retenue est pourvu d'un téton destiné à pénétrer dans un orifice du crochet pour limiter le débattement angulaire de l'anneau de retenue sous forte charge.

Selon une variante de réalisation, le moyen de verrouillage est formé par un ressort de compression prenant appui sur l'embase, et sollicitant le bouton vers la position de fermeture.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 sont des vues en perspective de l'ensemble de la boucle selon l'invention représentée respectivement en position de fermeture et en position d'ouverture;
- la figure 3 montre la boucle de la figure 1 vue sous un autre angle ;
- la figure 4 est une vue identique de la figure 3 après basculement de l'anneau vers le bouton ;
- les figures 4A et 5 représentent des vues en coupe longitudinale de la boucle en position de fermeture, et pour deux inclinaisons différentes ;
- la figure 5A illustre une vue en coupe à échelle agrandie du verrou de la figure 5 ;
- la figure 6 est une vue en élévation de la boucle selon la figure 5 ;
- les figures 7 et 8 sont des vues identiques de la boucle de la figure 5, respectivement en cours d'ouverture, et en fin de course d'ouverture ;
- les figures 9 à 11 illustrent les différentes phases de réglage de la sangle ;
- les figures 12A-12E représentent les différentes phases de montage et d'assemblage de la boucle ;
- la figure 13 est une vue identique de la figure 5 d'une variante de réalisation.

### Description détaillée de mode de réalisation de la boucle

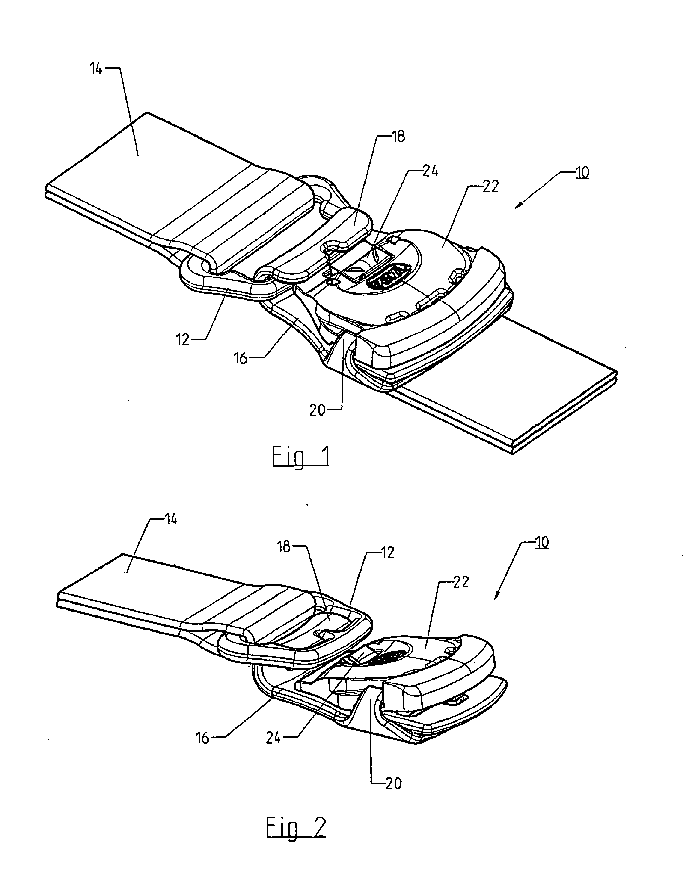

Sur les figures 1 à 8, une boucle de fixation 10 est destinée à recevoir un anneau de retenue 12 auquel est solidarisée l'extrémité d'une sangle 14 d'attache, par exemple d'une ceinture ou d'un harnais. L'autre extrémité de la sangle est attachée à la boucle 10.

La boucle de fixation 10 comporte une embase 16 métallique conformée en crochet 18 à la partie antérieure, et un étrier 20 à la partie postérieure. Le crochet 18 coopère par encliquetage avec l'anneau 12 lors de la fermeture de la boucle de fixation 10, tandis que l'étrier 20 sert de support d'articulation à un bouton 22 de manoeuvre. Ce dernier est monté à pivotement entre une position de fermeture pour emprisonner l'anneau 12 à l'intérieur du crochet 18, et une position d'ouverture pour la formation d'un intervalle de libération de l'anneau 12. Le bouton 22 peut être en matière plastique ou métallique.

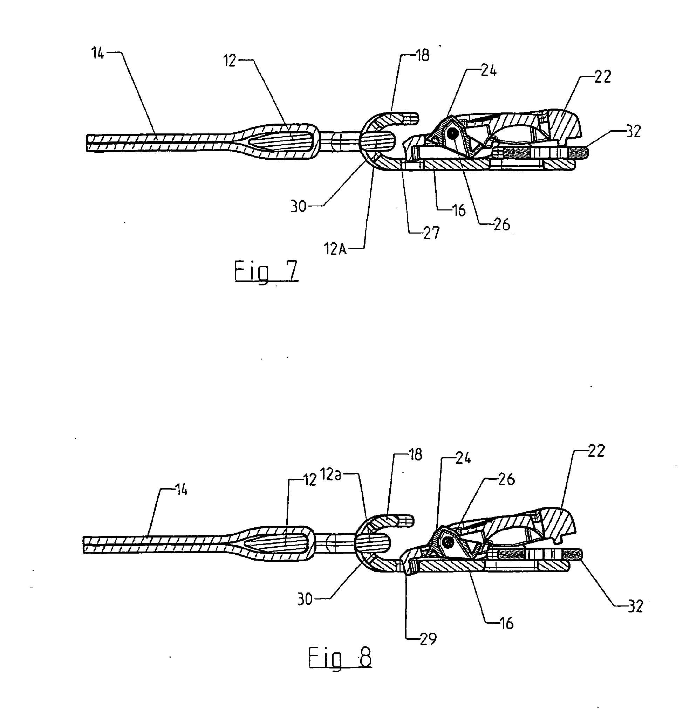

Un verrou 24 rotatif ou basculeur est associé au bouton 22 pour l'empêcher de se déplacer intempestivement vers la position d'ouverture. Le verrou 24 peut pivoter à cet effet autour d'un axe 26 entre une position verrouillée, et une position déverrouillée. Un ressort de rappel 28 (figure 5A), par exemple un ressort à torsion, est enfilé sur l'axe 26, et sollicite le verrou 24 dans le sens horaire vers la position verrouillée. Dans la position déverrouillée, une patte 29 du bouton 22 peut pénétrer dans un premier trou 27 de l'embase 16 pour autoriser le décrochage de l'anneau 12. Pour pousser le bouton 22 vers le bas dans le sens d'ouverture de la boucle 10, il est nécessaire au préalable de faire tourner le verrou basculeur 24 vers la position déverrouillée à l'encontre de la force de rappel du ressort 28 (figures 7 et 8).

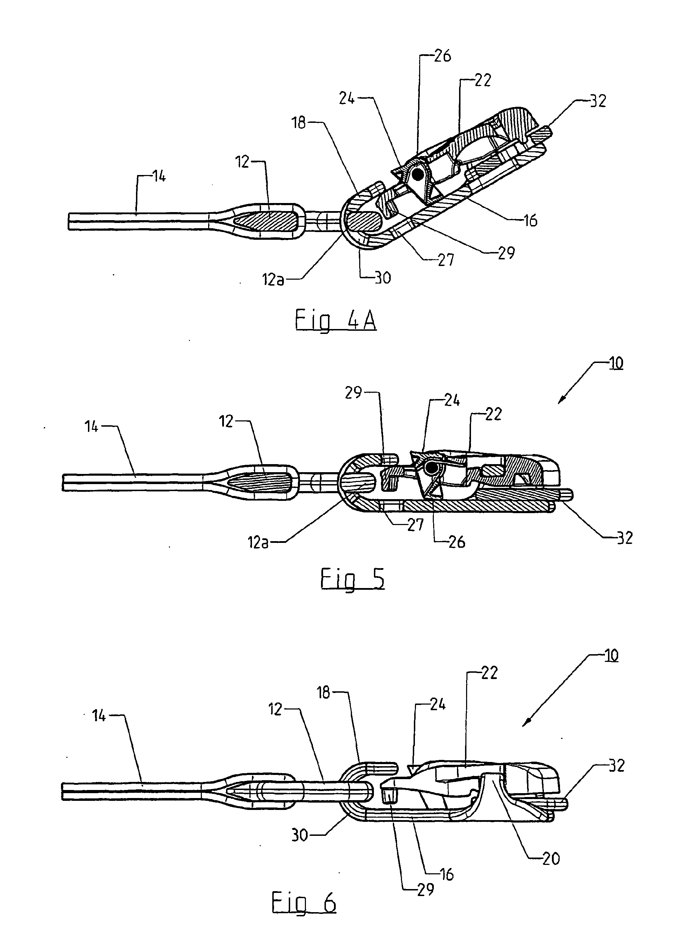

L'anneau 12 est pourvu dans la partie centrale d'un téton 12a destiné à pénétrer dans un orifice 30 axial du crochet 18 de manière à limiter le débattement angulaire de l'anneau 12 sous charge dans une mauvaise direction (figure 4), et à empêcher tout engagement contre le bouton 22 risquant de déverrouiller le verrou 24 rotatif.

La patte 29 sert également à empêcher le déplacement de l'anneau 12 vers la droite lorsque le bouton 22 se trouve en position de fermeture. Le téton 12a reste alors maintenu dans l'orifice 30 (figures 4A et 5).

En référence aux figures 9 à 11, l'extrémité de la sangle 14 située du côté de la boucle 10, est ajustable en longueur grâce à un anneau 32 de réglage intégré à la boucle 10 à l'opposé du crochet 18. Tout effort exercé sur la sangle 14 dans le sens de la flèche F1, provoque le déplacement dans le même sens de l'anneau de réglage 32, de manière à bloquer la sangle 14 (figure 9). L'embase 16 est dotée d'un deuxième trou 33 pour le passage de la sangle 14.

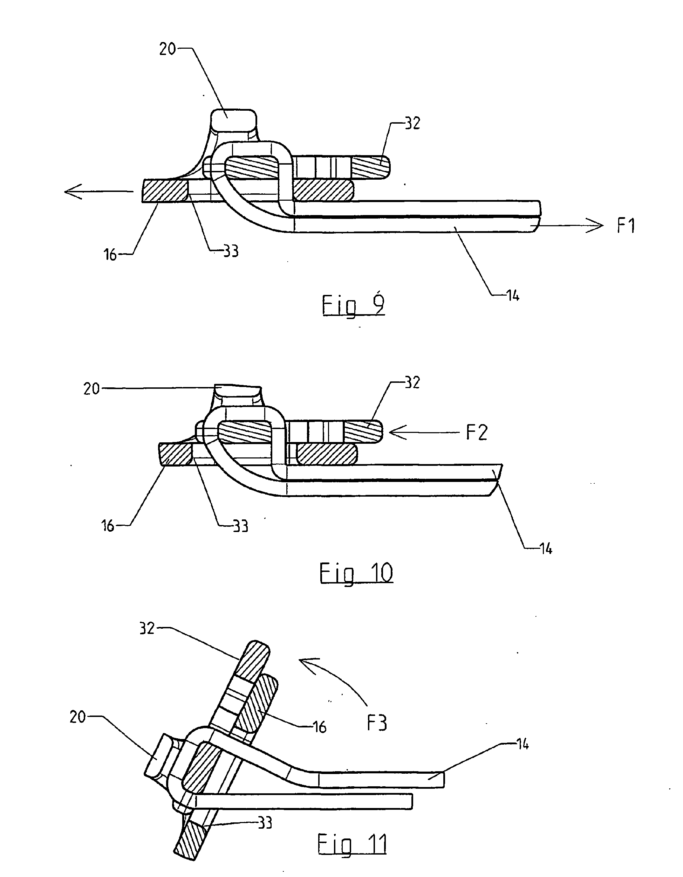

Pour décoincer la sangle 14, il suffit de repousser l'anneau de réglage 32 dans le sens de la flèche F2 (figure 10), ou de faire basculer la boucle 10 dans le sens de la flèche F3 (figure 11). Le réglage peut être ensuite opéré en tirant sur l'un des brins de la sangle 14.

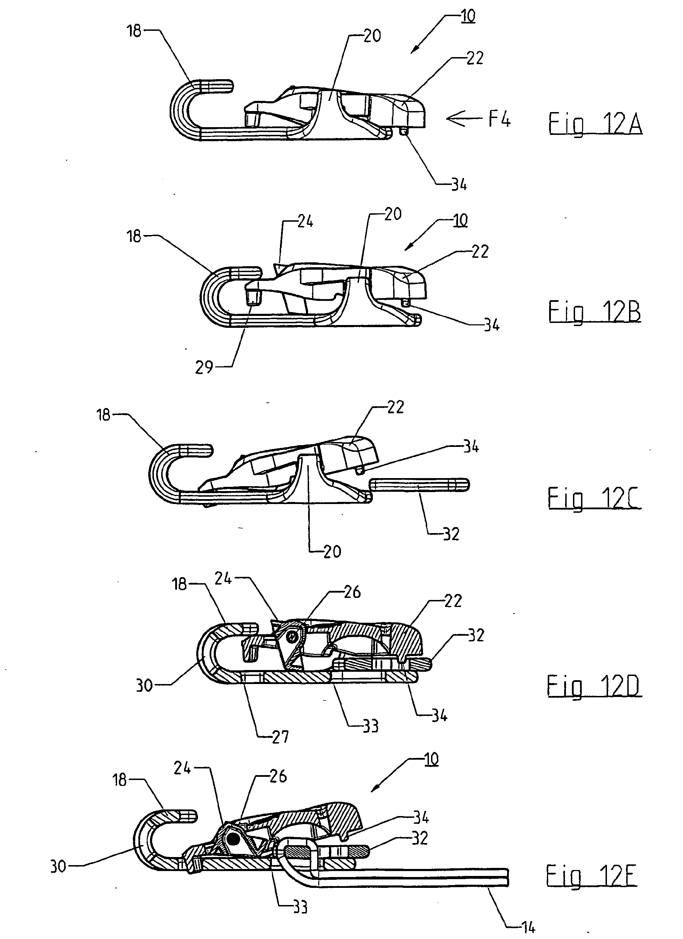

Les différentes phases de montage de la boucle 10 sont illustrées sur les figures 12A à 12E. Après assemblage du verrou 24 sur le bouton 22, on glisse ce dernier dans le sens de la flèche F4, sous les deux pattes d'articulation de l'étrier 20 (figure 12A).

Sur la figure 12B, le bouton 22 remonte dans son logement, et est prêt à pivoter. Il présente à l'arrière un ergot 34 de retenue destiné à maintenir l'anneau de réglage 32 en place.

Sur la figure 12C, l'anneau de réglage 32 est introduit dans la boucle 10 à l'arrière de l'étrier 20. Le basculement vers l'avant du bouton 22 provoque le relèvement de l'ergot 34 pour autoriser le mouvement de glissement longitudinal de l'anneau de réglage 32.

La figure 12D montre la boucle 10 dans un état de prémontage manipulable. L'ergot 34 de retenue est logé dans l'orifice de l'anneau de réglage 32, et empêche ce dernier de ressortir en le maintenant en contact avec la face interne de l'embase 16.

Sur la figue 12 E, l'introduction de la sangle 14 par le trou 33 assure le maintien de l'anneau de réglage 32, lequel solidarise le bouton 22 dans l'étrier 20. Un tel montage de la boucle 10 s'effectue sans outil, et est rendu indémontable suite à l'insertion de la sangle 14.

Le fonctionnement de la boucle de fixation 10 est le suivant :

Sur les figures 1 ,5 et 5A, la boucle 10 se trouve en position de fermeture, et le bouton 22 est bloqué par le verrou 24 en position verrouillée par le ressort 28. L'anneau de retenue 12 est ancré positivement dans le crochet 18 de l'embase 16.

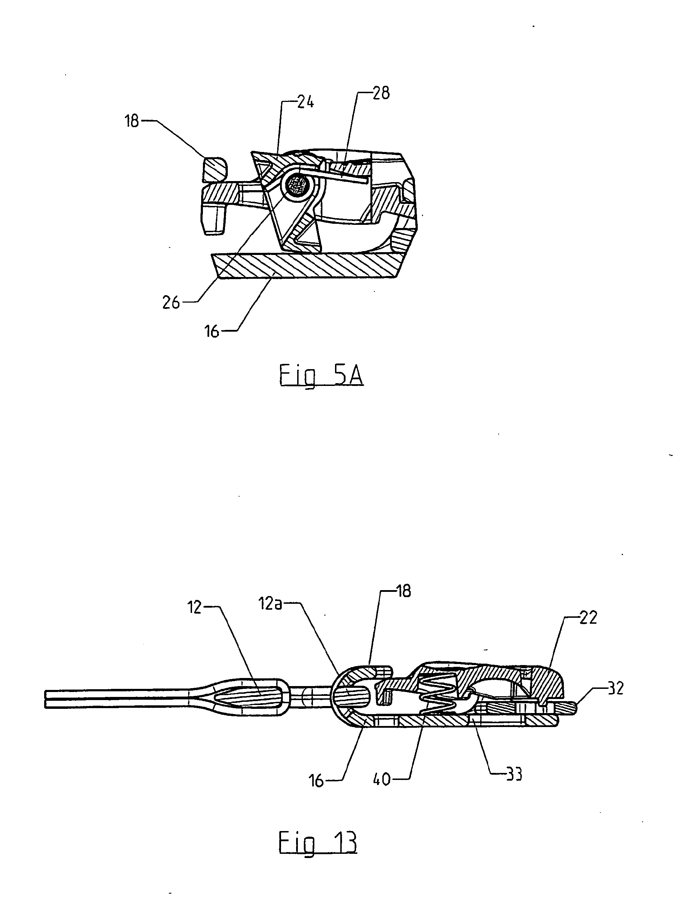

Dans la figure 6, toute tentative d'appui volontaire sur le bouton 22 ne permet pas l'ouverture tant que le verrou 24 reste en position verrouillée, c'est à dire en prenant appui sur l'embase 16. Une ouverture intempestive de la boucle 10 est ainsi rendue impossible.

La commande d'ouverture nécessite deux actions distinctes consécutives :
- une première action de déverrouillage du verrou 24 et d'appui sur le bouton 22 pour ouvrir la boucle 10 ;
- une deuxième action pour décrocher l'anneau 12 du crochet 18, en le déplaçant dans le sens opposé à celui de la tension de la sangle 14.

La première action manuelle de l'action de déverrouillage est représentée sur les figures 7 à 8.

Sur la figure 7, après rotation du verrou 24 dans le sens horaire, le point de contact du verrou 24 sur l'embase 16 se trouve en arrière de l'axe 26 autorisant le basculement du capot 22 dans le même sens.

Sur la figure 8, le verrou 24 se trouve en position déverrouillée, permettant l'ouverture complète de la boucle 10.

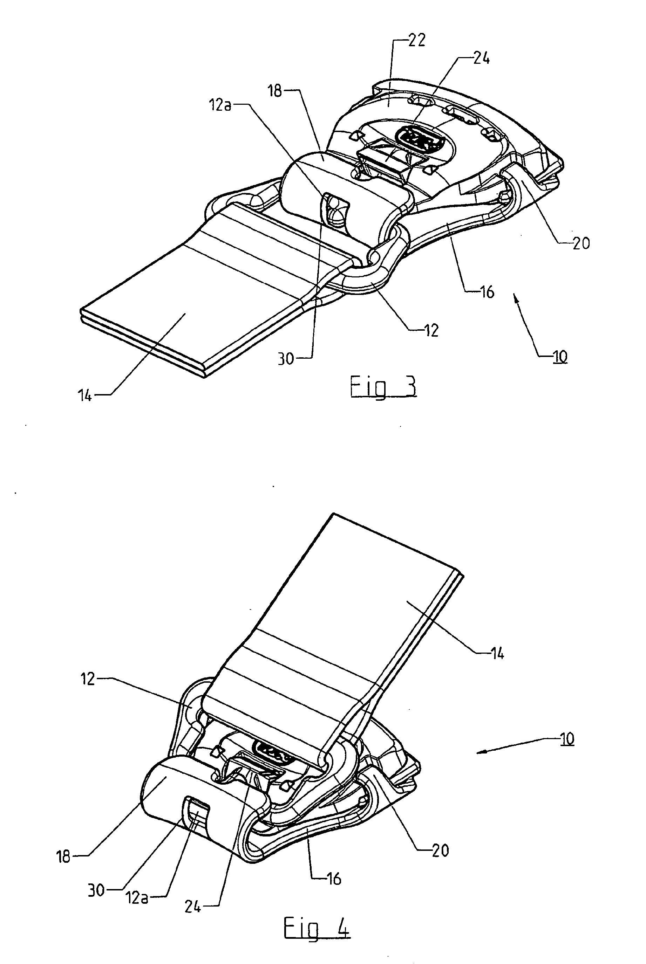

L'anneau de retenue 12 peut maintenant être décroché du crochet 18, comme indiqué à la figure 2.

Le relâchement du bouton 22 permet d'obtenir un réarmement automatique du verrou 24 et de rappel du bouton 22 dans la position de la figure 5.

Selon une variante de réalisation illustrée à la figure 13, le verrou 24 est remplacé par un ressort 40 de compression intercalé entre le bouton 22 et l'embase 16.

Pour obtenir l'ouverture de la boucle, il suffit d'appuyer sur le bouton 22 pour autoriser le décrochage de l'anneau de retenue 12.

## Revendications

1. Boucle de fixation à autoverrouillage comprenant une embase (16) équipée d'un crochet (18) pour l'accrochage d'un anneau de retenue (12), et un bouton de manoeuvre (22) mobile entre une position de fermeture et une position d'ouverture de la boucle, respectivement pour retenir et libérer ledit anneau de retenue,
**caractérisée en ce qu'**elle comporte de plus :
- un moyen de verrouillage du bouton de manoeuvre (22) en position de fermeture,
- et un anneau de réglage (32) de la longueur de la sangle (14), ledit anneau étant inséré entre le bouton (22) et l'embase (16) à l'opposé du crochet (18).

2. Boucle de fixation selon la revendication 1, **caractérisée en ce que** le moyen de verrouillage comprend un verrou (24) agencé en basculeur monté à pivotement sur un axe (26) entre une position verrouillée et une position déverrouillée, et un ressort de rappel (28) sollicitant le réarmement automatique dudit verrou (24) en position verrouillée pour empêcher le déplacement du bouton de manoeuvre (22) vers la position d'ouverture.

3. Boucle de fixation selon la revendication 1, **caractérisée en ce que** le moyen de verrouillage est formé par un ressort (40) de compression prenant appui sur l'embase (16), et sollicitant le bouton (22) vers la position de fermeture.

4. Boucle de fixation selon la revendication 1, **caractérisée en ce que** l'embase (16) comporte un étrier (20) agencé en support d'articulation du bouton de manoeuvre (22), et un premier trou (27) pour l'introduction d'une patte (29) du bouton (22) lors du passage vers la position d'ouverture.

5. Boucle de fixation selon la revendication 2, **caractérisée en ce que** le ressort du rappel (28) est formé par un ressort de torsion enfilé sur l'axe (26) du verrou (24).

6. Boucle de fixation selon l'une des revendications précédentes, **caractérisée en ce que** l'anneau de retenue (12) est pourvu d'un téton (12a) destiné à pénétrer dans un orifice (30) du crochet (18) pour limiter le débattement angulaire de l'anneau de retenue (12) sous forte charge.

7. Boucle de fixation selon l'une des revendications précédentes, **caractérisée en ce que** l'embase (16) est dotée d'un deuxième trou (33) situé sous l'anneau de réglage (32) pour le passage de la sangle (14).

8. Boucle de fixation selon l'une des revendications précédentes, **caractérisée en ce que** le bouton de manoeuvre (22) est équipé d'un ergot (34) destiné à maintenir l'anneau de réglage (32) en place lorsque le bouton (22) se trouve en position de fermeture.

## Claims

1. A self-locking fixing loop comprising a base (16) equipped with a clasp (18) for hooking a retaining ring (12) thereon, and an operating button (22) movable between a closed position and an open position of the loop, respectively to hold and release said retaining ring,
**characterized in that** it comprises in addition:
- a locking means for locking the operating button (22) in the closed position,
- and an adjustment ring (32) for adjusting the length of the strap (14), said ring being inserted between the button (22) and the base (16) opposite the clasp (18).

2. The fixing loop according to claim 1, **characterized in that** the locking means comprises a catch (24) arranged as a rocker pivotally mounted on a spindle (26) between a locked position and an unlocked position, and a return spring (28) urging automatic resetting of said catch (24) in the locked position to prevent the operating button (22) from moving to the open position.

3. The fixing loop according to claim 1, **characterized in that** the locking means is formed by a compression spring (40) pressing on the base (16) and urging the button (22) to the closed position.

4. The fixing loop according to claim 1, **characterized in that** the base (16) comprises a flange (20) arranged as a support for articulation of the operating button (22), and a first hole (27) for insertion of a lug (29) of the button (22) when movement takes place to the open position.

5. The fixing loop according to claim 2, **characterized in that** the return spring (28) is formed by a torsion spring wound on the spindle (26) of the catch (24).

6. The fixing loop according to one of the foregoing claims, **characterized in that** the retaining ring (12) is provided with a pin (12a) designed to enter a hole (30) of the clasp (18) to limit the angular movement of the retaining ring (12) under a strong load.

7. The fixing loop according to one of the foregoing claims, **characterized in that** the base (16) is provided with a second hole (33) situated under the adjustment ring (32) for passage of the strap (14).

8. The fixing loop according to one of the foregoing claims, **characterized in that** the operating button (22) is equipped with a spigot (34) designed to keep the adjustment ring (32) in place when the button (22) is in the closed position.

## Patentansprüche

1. Befestigungsschnalle mit automatischer Verriegelung, die einen Fußteil (16) umfasst, der mit einem Haken (18) zum Einhängen eines Rückhalterings (12) versehen ist, und einen Betätigungsknopf (22), der zwischen einer Schließ- und einer Öffnungsposition der Schnalle beweglich ist, um den Rückhaltering jeweils zurückzuhalten bzw. freizugeben,
**dadurch gekennzeichnet, dass** sie ferner umfasst:
- eine Verriegelungsvorrichtung für den Betätigungsknopf (22) in Verschlussposition,
- und einen Ring (32) zum Einstellen der Länge des Gurtbands (14), welcher Ring zwischen dem Knopf (22) und dem Fußteil (16) entgegengesetzt zum Haken (18) vorgesehen ist.

2. Befestigungsschnalle nach Anspruch 1, **dadurch gekennzeichnet, dass** die Verriegelungsvorrichtung einen als Kippriegel ausgebildeten Riegel (24), der zwischen einer verriegelten und einer entriegelten Position schwenkbar um eine Achse (26) montiert ist, und eine Rückholfeder (28) umfasst, die den Riegel (24) automatisch wieder in die verriegelte Position zurückzieht, um zu verhindern, dass sich der Betätigungsknopf (22) in Richtung auf die Öffnungsposition bewegt.

3. Befestigungsschnalle nach Anspruch 1, **dadurch gekennzeichnet, dass** die Verriegelungsvorrichtung von einer Kompressionsfeder (40) gebildet wird, die auf dem Fußteil (16) aufliegt und den Knopf (22) in Richtung auf die Verschlussposition zieht.

4. Befestigungsschnalle nach Anspruch 1, **dadurch gekennzeichnet, dass** der Fußteil (16) einen Bügel umfasst, der als Schwenkhilfe für den Betätigungsknopf (22) vorgesehen ist, und eine erste Öffnung (27) zum Einführen einer Zunge (29) des Knopfes beim Übergang in die Öffnungsposition.

5. Befestigungsschnalle nach Anspruch 2, **dadurch gekennzeichnet, dass** die Rückholfeder (28) von einer Torsionsfeder gebildet wird, die auf die Achse (26) des Riegels (24) aufgeschoben ist.

6. Befestigungsschnalle nach einem der vorstehenden Ansprüche, **dadurch gekennzeichnet, dass** der Rückhaltering (12) mit einem Zapfen (12a) versehen ist, der in eine Öffnung (30) des Hakens (18) greifen soll, um das Winkelspiel der Rückhalterings (12) bei hoher Belastung zu begrenzen.

7. Befestigungsschnalle nach einem der vorstehenden Ansprüche, **dadurch gekennzeichnet, dass** der Fußteil (16) mit einer zweiten Öffnung (33) versehen ist, die zum Durchführen des Gurtbands (14) unter dem Verstellring (32) angeordnet ist.

8. Befestigungsschnalle nach einem der vorstehenden Ansprüche, **dadurch gekennzeichnet, dass** der Verstellknopf (22) mit einem Nocken (34) versehen ist, der vorgesehen ist, den Verstellring (32) an Ort und Stelle zu halten, wenn sich der Knopf (22) in Verschlussstellung befindet.
